# EUROPEAN PATENT APPLICATION

(11) **EP 3 136 317 A1**
(43) Date of publication of application: **01.03.2017**
(21) Application number: 16166758.9
(22) Date of filing: 23.04.2016
(51) Int. Cl.: G06Q 10/08

(54) **A SYSTEM AND METHOD FOR GENERATING A LIST OF TASK ITEMS AND/OR ACTIONS TO PERFORM**

(30) Priority: 28.08.2015 BR 102015020940
(71) Applicant: Trindade de Sousa Monteiro, Luciano, 04565-001 Sao Paulo (BR)
(72) Inventor: Trindade de Sousa Monteiro, Luciano, 04565-001 Sao Paulo (BR)
(74) Representative: Fabry, Bernd

(57) **Abstract**

The present invention relates to a system and a method for generating a list (60) of task items and/or actions to perform, comprising at least one information-carrying element (10) and a reading device (20), and at least one information-carrying element (10) being provided with an identification means (12) and the reading device (20) being provided with a reading means (22), the identification means (12) and the reading means (22) being configured for establishing a data communication (50) between at least one information-carrying element (10) and the reading device (20), the reading device (20) being configured for reading data stored on at least one information-carrying element (10) through the data communication (50), the reading device (20) being further configured for processing the data read and generating the list (60) from said data.

## Description

### FIELD OF INVENTION

The present invention relates to a system and to a method for generating a list of task items and/or actions to do, the list being generated through the reading, by means of a reading device, of information-carrying elements arranged in a storage means or a surface.

The system and the method are, in general, used for generating an electronic shopping list with products to be acquired at a supermarket or similar stores.

### DESCRIPTION OF THE PRIOR ART

A growing need in the life of the human being is that of periodically having to remember to carry out a certain task or action.

Various types of tasks or actions, as for example, acquiring and/or replacing the stocks from the domicile or from the company with food and/or cleaning products, requesting insecticide-spraying services, car washing, scheduling services such as medical consultations, vehicle inspection, among others, should be carried out periodically.

In the case of acquiring food and/or cleaning products, the consumer should go to a supermarket, grocery stores or similar stores, which takes some time depending on the amount of products to be purchased. However, there are supermarkets, grocery stores or similar stores that have on-line shopping services, but such a service take some time.

In the case of requesting services, the consumer should call the respective companies for scheduling the desired services, which also requires time, depending on the rapidity of the attendants.

When such needs arise, in general, the consumer establishes reminders for carrying out these tasks and/or actions within a given time, the reminder being used chiefly due to lack of time.

Consumers can make use of the most varied types of reminders, such as writing down, using Post-it^{®}, warnings on cellular phones, magnets stuck onto refrigerators with areas for taking notes, secretaries, electronic reminders on computers, among others. In general, reminders are intended for being easily visually detected, so that the consumer will not forget his tasks and/or actions to do.

Although these reminders are convenient, the consumer often ignores them and only "put off till later" the carrying-out of these tasks and/or actions to perform.

One observes that none of the solutions eliminates the consumer's need to have to carry out the task and/or action, and one eventually has to save some time for carrying out it.

Additionally, one observes that none of the solutions proposes sharing the reminder data on a communication network, so that the suppliers and/or providers of tasks and/or actions to perform can make proposals to the consumer.

Finally, one observes that none of the solutions proposes an easy way to carry out the items tasks and/or actions by selecting the suitable proposal, without requiring too much time to do so.

### OBJECTIVES OF THE INVENTION

A first objective of the present invention is to provide a system and a method in which the consumer will have information-carrying elements in a storage means or a surface for reminding one of the items tasks and/or actions to perform.

A second objective of the present invention is to provide a system and a method in which the consumer can read data of the information-caring elements and generate a list thereof by means of a reading device.

A third objective of the present invention is to provide a system and a method in which the list generated by the consumer is shared through a communication network with a plurality of suppliers and/or providers of tasks and/or actions to perform.

A fourth objective of the present invention is to provide a system and a method in which the plurality of suppliers and/or providers of tasks and/or actions to perform can send proposals to carry out and/or supply the items of the consumer's list.

A fifth objective of the present invention is to provide a system and a method in which the consumer selects one of the proposals sent by one of the suppliers and/or providers.

A final objective of the present invention is to provide a system and a method in which a managing system monitors whether the consumer pays for the selected proposal composed by the items of the list and whether the selected supplier and/or the provider provides and delivers the proposal composed by list of items of the to the consumer.

### BRIEF DESCRIPTION OF THE INVENTION

The objectives of the present invention are achieved by means of a system and a method for generating a list of task items and/or actions to perform, comprising at least one information-carrying element and a reading device, said at least information-carrying element being provided with an identification means and the reading device being provided with a reading means, the identification means and the reading means being configured to establish a data communication between said at least one information-carrying element and the reading device, the reading device being configured to read data stored in said at least one information-carrying element through the data communication, the reading device being further configured to process the read data and to generate the list from said data.

The objectives of the present invention are further achieved by means of a system and a method for generating a list of task items and/or actions to perform through a communication network comprising a plurality of consumers, a plurality of suppliers and/or providers of tasks and/or actions to perform, the plurality of consumers having at least one information-carrying element on a storage means or on a surface, said at least one information-carrying element representing task items and/or actions to perform and storing different types of characteristics related to the type of product or service, amount, color, mark, among others, the system further comprising a reading device configured to read data stored in said at least one information-carrying element through a data communication, the reading device being further configured to process the read data and to generate the list for each of the consumers of the plurality of consumers, the reading device sharing, through the communication network, the list to each of the consumers of the plurality of consumers, with the plurality of suppliers and/or providers of tasks and/or actions to perform, the plurality of suppliers and/or providers of tasks and/or actions to perform accessing the list for each of the consumers of the plurality of consumers by means of a website or in an application, the plurality of suppliers and/or providers of tasks and/or actions to perform sending proposals to carry out and/or to supply tasks and/or actions to perform of the list to each of the consumers of the plurality of consumers.

### BRIEF DESCRIPTION OF THE FIGURES

The present invention will now be described in greater detail with reference to an example of embodiment represented in the drawings. The figures show:
**Figure 1** is an illustration of a storage means, in this case a contact surface (refrigerator) provided with a plurality of information-carrying elements such as proposed by the present invention;
**Figure 2** is an illustration of a storage means, in this case a box, provided with a plurality of information-carrying elements such as proposed by the present invention;
**Figures 3** **and** **4** are illustrations of a user carrying out the reading of the plurality of information-carrying elements by means of a reading device such as proposed by the present invention;
**Figures 5** **and** **6** are illustrations of the schematic communication configuration of the system proposed by the present invention; and
**Figure 7** is an additional illustration of the schematic communication configuration of the system proposed by the present invention.

### DETAILED DESCRIPTION OF THE INVENTION

As described before, the invention relates to a system and a method for generating a list of task items and/or actions 60, wherein the tasks and/or actions may be of the most varied types.

In a preferred, but not compulsory embodiment, the task items and/or actions are products to be acquired, sold, replaced, exchanged and/or services to be scheduled, requested, among others.

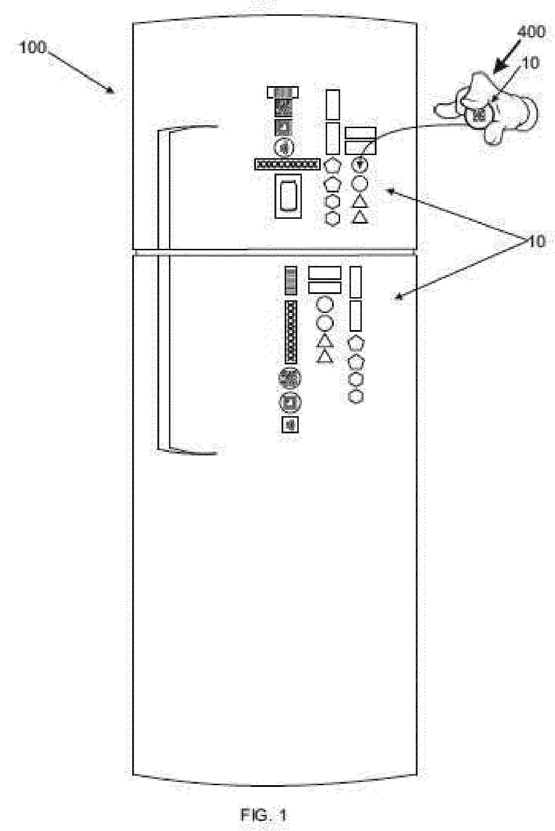

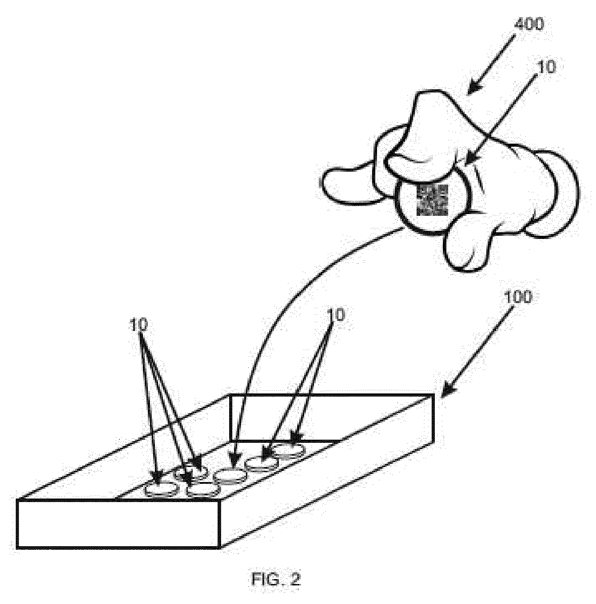

For example, in the case of products, a consumer and/or requester 400 can arrange information-carrying elements 10 on a storage means 100, the storage means 100 being a contact surface **(****Figure 1****)** or a box **(****Figure 2****),** when there is a need to acquire and/or replace food products, cleaning products, among others acquired at supermarkets and/or similar stores.

In a similar way, in the case of services, the consumer and/or requester 400 can arrange information-carrying elements 10 on the storage means 100, when one needs to request insecticide-spraying services, vehicle wash, scheduling medical consultations, scheduling vehicle inspection, among other types of services.

Similarly, the information-carrying elements 10 might be used at manufacture facilities, to designate which employees will perform a certain function, which product will be manufactured, among others.

Obviously, the present system and method can be used with other types of task items and/or actions, the above examples having been given only to facilitate the understanding of the present invention.

As mentioned before, when the consumer and/or requester 400 wishes to generate the list 60 of task items and/or actions to perform, one arranges information-carrying elements 10 on the storage means 100, as shown in **Figures 1** **and** **2****.**

In a preferred embodiment, the information-carrying elements 10 may have identification means 12, which may be related to the shapes of the information-carrying elements 10. As an example, **Figure 1** shows the information-carrying elements 10 with a circular, square, rectangular, trapezoidal, pentagonal, hexagonal shape, etc..

Further, in a preferred embodiment, the identification means 12 may also be printed figures, numbers or characters, among others. As an example, **Figure 1** shows the information-carrying elements 10 illustrating a soft-drink can.

Additionally, the identification means 12 may be data communication means such as Radio Frequency Identification (RFID) means, Near Field Communication (NFC) means, Bluetooth, Wi-Fi, bar code, QR-Code-type bar code, among others existing or which may be developed.

It is noted that the shapes, the identification means 12 of the information-carrying elements 10 are sized and selected in accordance with the characteristics related to the task items and/or actions to perform. In a preferred embodiment, these are characteristics related to the types of product or service, amount, color, trademark, frequency, among others. One observes that the information-carrying elements 10 should comprise at least one identification means 12.

In a preferred embodiment, the information-carrying elements 10 also comprise, on one of their faces, a surface capable of adhering, in a magnetic way or in a detachable and non-destructive manner, to the metallic or other contact surface 100. The contact surface 100 may be a refrigerator, a metallic wall panel or a metallic surface, as shown in **Figure 1****.**

Further, one can observe in **Figure 1****,** examples of information-carrying elements 10 arranged on a contact surface 100. In this case, one can see that the contact surface 100 is a refrigerator and that there are various types of information-carrying elements 10 arranged on it.

In a similar way, **Figure 2** shows information-carrying elements 10 arranged/placed inside a box 100.

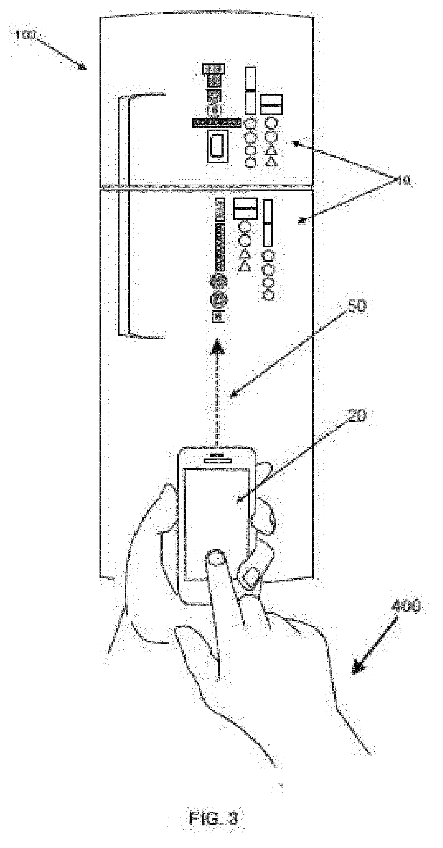

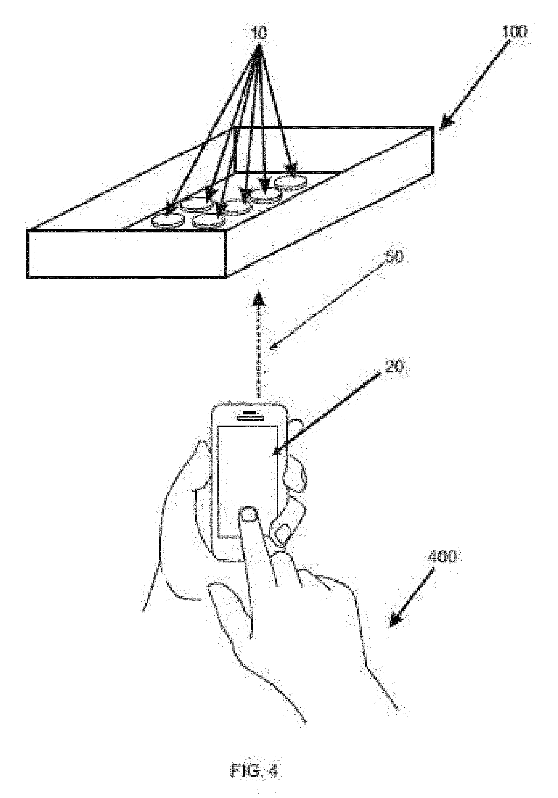

In turn, **Figures 3** **and** **4** show the consumer and/or requester 400 carrying out a reading of the information-carrying elements 10 by means of a reading device 20. The latter may be a portable device, such as a cellular apparatus, a camera, a tablet, among others. One observes that the type of reading device 20 should be compatible with the type of information-carrying elements 10 used.

In order for the information-carrying elements 10 to be read, the consumer and/or requester 400 should approach the reading device 20 to the elements 10, as shown in figures 3 and 4, so that the distance will be in conformity with each type of reader.

It should be noted that, if the information-carrying elements 10 only contain visual identification means 12, such as shapes, printed figures, numbers, letters, among others, the reading device 20 will make use of reading means 22 for visual reading and detection of the information-carrying elements 10. The reading means 22 being configured for Optical Character Recognition (OCR) or for image recognition.

Similarly, if the information-carrying elements 10 contain data-communication identification means 12, the reading device 20 will make use of the reading means 22 for reading and detecting the information-carrying elements 10. The reading means 22 is configured for communication through Radio Frequency Identification (RFID) means, Near Field Communication (NFC) means, Bluetooth, Wi-Fi, bar code, QR-Code-type bar code, among others.

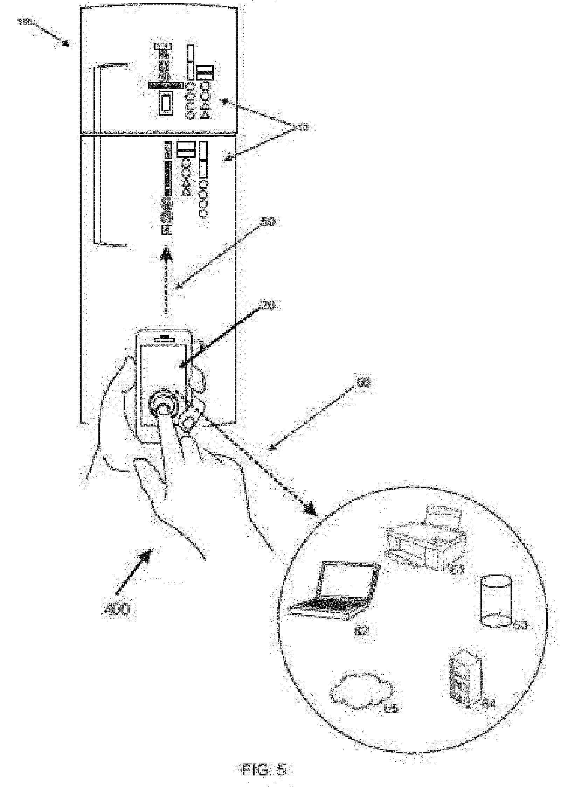

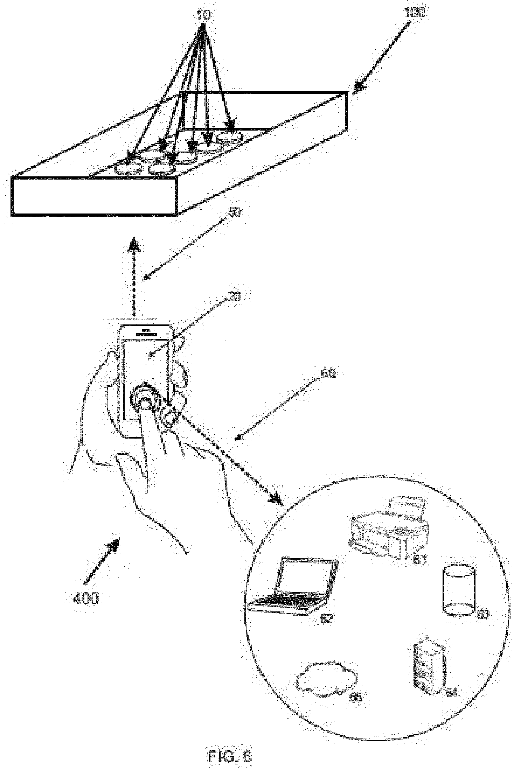

The identification means 12 and the reading means 22 should be compatible, so that a correct reading can be carried out and, as a result, a correct visual detection of the stored data in the information-carrying elements 10. Moreover, if there is compatibility, a data communication 50 is established between the information-carrying elements 10 and the reading device 20, as shown in **Figures 5** **and** **6****.**

One observes that the exchange of data between the reading device 20 and the information-carrying elements 10 is carried out by the established data communication 50, the reading device 20 further being configured for processing the read data and for generating the list 60 from them. The list 60 comprises a plurality of task items and/or actions to perform, these being the stored data in the information-carrying elements 10.

The list 60 may be stored on the reading device 20 or shared, by means of a communication network 300, with at least one printer 61 to be printed, with at least one access device 62, with at least one database 63, with at least one server 64 or with at least one server 65 to be stored. The access means 62 may be a cellular apparatus, a tablet, a personal computer, a notebook, among others.

The communication network 300 comprises basically a dynamic database and an Internet/Web interface, the database may be a hard disk drive (HDD), a CD drive, memory cards, a non-volatile storing chip (Electrically-Erasable Programmable Read-Only Memory - EE-PROM), a Flash memory or any memory device capable of receiving, transmitting and storing data. The communication network 300 also comprises processing circuits for processing the stored data in the database.

The communication network 300 being connected to one or more existing wireless or wired networks, such as a Personal Area Network (PAN), a Local Area Network (LAN), a Metropolitan Area Network (MAN), a Wide Area Network (WAN), a Wireless Local Area Network (WLAN), among others.

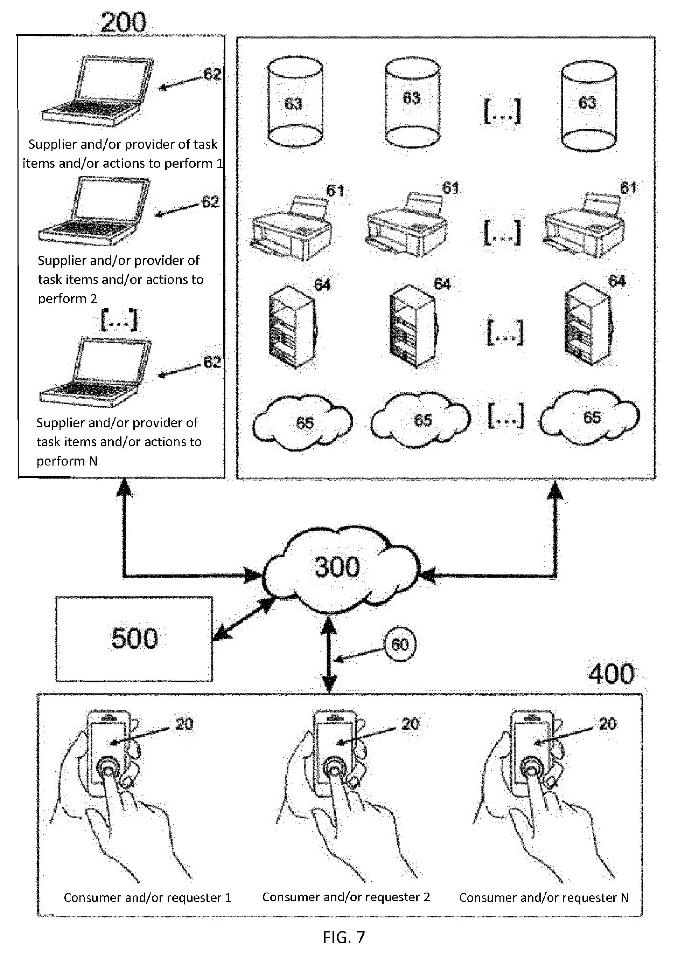

One observes in Figure 7 that the reading devices 20, the printers 61, the access devices 62, the databases 63, the servers 64 and the cloud servers 65 are connected to the databases and to the Internet/Web interface of the communication network 300. Such connections establish the connection between a plurality of consumers and/or requesters 400, which make use of the reading devices 20, to a plurality of suppliers and/or providers of task items and/or actions to perform 200, which make use of the access devices 62. The plurality of consumers and/or requesters 400 and the plurality of suppliers and/or providers of tasks and/or actions to perform 200, in turn, being connected to the communication network 300.

The present system may further comprise a managing system 500, the latter being an user connected to a movable or fixed terminal, such as a personal computer, a tablet, a cellular apparatus or any other device responsible for the coordination of the system through the communication network 300. If the managing system 500 is an user, the latter may, for instance, coordinate the system by means of a dedicated application.

The managing system 500 may also be autonomous and automatic, being, by means of processors, controllers, memories or any other electronic component, capable of coordinating, by means of an artificial intelligence, the system through the communication network 300.

The plurality of consumers and/or requesters 400 and the plurality of suppliers and/or providers of tasks and/or actions to perform 200 communicate with the communication network 300 of wired or wireless networks, such as a Personal Area Network (PAN), a Local Area Network (LAN), a Metropolitan Area Network (MAN), a Wide Area Network (WAN), a Wireless Local Area Network (WLAN), Telecommunication Networks 2G, 3G, and 4G (General Packet Radio Services - GPRS / Universal Mobile Telecommunications System-UMTS / Wide Code Division Multiple Access - WCDMA / Long Term Evolution - LTE), infrared protocol, Bluetooth, among others.

The communication network 300 further being responsible for providing at least one list 60, generated by the reading devices 20 of the plurality of consumers and/or requesters 400, to the website or to the application. Such provision enables the plurality of suppliers and/or providers of tasks and/or actions to perform 200 to have access to at least one list 60 through the communication network 300.

Once at least one list 60 has been received, the plurality of suppliers and/or providers of task items and/or actions to perform 200 sends proposals for carrying out and/or supplying the tasks and/or actions of said at least one list 60.

The proposals are then received by the communication network 300 and stored in the database. The proposals sent to each of the suppliers and/or providers of the plurality of suppliers and/or providers of task items and/or actions to perform 200 are stored in the Internet/Web interface, the information of the proposals being made available for the plurality of consumers and/or requesters 400.

After the storage of the information in the Internet/Web interface, the managing system 500 posts them on the website portal with access released to the public.

The proposals had been published; the plurality of consumers and/or requesters 400 accesses the website to select one of the proposals sent to the respective list 60.

If the plurality of consumers and/or requesters 400 is not registered on the website, one shall fill in registration data and obtain approval from the managing system 500. The latter being responsible for analyzing the registration, emitting contract terms to each of the suppliers and/or providers of the plurality of suppliers and/or providers of task items and/or actions to perform 200 and to each consumer of the plurality of consumers and/or requesters 400.

All those who have access to the operational contents of the website shall be previously registered and approved by the managing system 500 for verification of their qualifications.

If the plurality of consumers and/or requesters 400 is registered on the website, one should then access it to verify and select the proposals of its interests, that is, the proposals of the plurality of suppliers and/or providers of task items and/or actions to perform 200.

As an example, a consumer and/or requester 400 may have arranged on the storage means 100 a plurality of information-carrying elements 10 having, as characteristics, the type and the amount of products to be acquired at the market. For instance, the plurality of information-carrying elements 10 may represent that the consumer and/or requester 400 needs 1 packet of rice, 1 packet of beans, 1 packet of macaroni and 1 bunch of tomato. The consumer and/or requester 400 then carries out the reading of the information-carrying elements 10 by means of the reading device 20 and the list 60 is generated with the products to be acquired at the market. As described before, the list 60 is made available by the communication network 300 on the website or on the application.

Having such a list 60 as a basis, the supplier and/or provider of the plurality of suppliers and/or providers of task items and/or actions to perform 200 sends a proposal, so that the consumer and/or requester 400 will acquire his respective items. In this case, the suppliers and/or providers 200 may be supermarkets, green-groceries, grocery stores or similar stores.

A first supplier and/or provider 200 may, for instance, send a proposal of R$ 17,00, a second suppler and/or provider 200 may, for instance, send a proposal of R$ 20,00 and a third supplier and/or provider 200 may, for instance, send a proposal of R$ 25,00 to a certain list 60 of the consumers and/or requesters 400. The consumer and/or requester 400 has the option of selecting the proposal which one desires to acquire to his respective list 60.

Once the proposal has been selected, the managing system 500 will inform all the suppliers and/or providers that the consumer and/or requester 400 having a certain list 60 has accepted a certain proposal.

After the communication that the given list 60 of one of the consumers and/or requesters 400 has been acquired, the managing system 500 will further be responsible for monitoring the payment of the proposal referring to the list 60 of the supplier and/or provider 200, the latter had been selected by the respective consumer and/or requester 400. The managing system 500 additionally monitors the supply of the task items and/or actions to perform of the list 60 by the supplier and/or by the provider 200 to the consumer and/or requester 400, and collects the auction-administration fee

The supplier and/or provider 200 then will supply the task items and/or actions to perform of the list 60, while the consumer and/or the requester 400 will provide the payment for the task items and/or actions to perform of the list 60.

Still using the example of the list 60 comprising products to be acquired at the market, supposing that the consumer and/or requester 400 has selected the second proposal (R$ 20,00) of a second supplier and/or provider, one observes that the managing system 500 will inform the other suppliers and/or proposals that the consumer and/or requester 400 has accepted a certain proposal to its list 60.

The managing system 500 will then monitor whether the consumer and/or requester 400 pays for the products acquired from the proposal of R$ 20,00 referring to the list 60 of the second supplier and/or provider 200. After the payment, the managing system 500 additionally will monitor whether the second supplier and/or the provider 200 supplies and delivers the products acquired from the proposal of R$ 20,00.

In an alternative embodiment, the consumer and/or requester 400 may also have information-carrying elements 10, which have, as characteristics, the frequency or the payment form for carrying out a given task and/or action to perform. Still using the example of the products to be acquired at the supermarket, the generated list 60 may have, for instance, a monthly frequency during 6 months. Moreover, the generated list 60 may have, for instance, cash-payment form. In the face of such a scenario and as mentioned before, the plurality of suppliers and/or providers 200 will send proposals to the consumer and/or requester 400, and the latter, in turn, will select a given proposal of a supplier and/or provider 200. In this case, the products of the list 60 will be paid in cash and those supplied and delivered monthly by the next 6 months.

If the consumer and/or requester 400 so wants, one may remove the information-carrying elements 10 from the storage means 100, since the products have already been acquired. After said payment and said delivery of the task items and/or actions to perform, the list 60 is removed from the communication network 300.

If the consumer and/or requester 400 so wants, one may restart the arrangement of the information-carrying elements 10 on the storage means 100 and carry out a new reading to generate a new list 60. The latter having again a plurality of proposals for supplying task items and/or actions to perform.

The information-carrying elements 10 used in the present system and method may be distributed over the most varied suppliers and/or providers of items free of charge.

A preferred example of embodiment having been described, it should be understood that the scope of the present invention embraces the possible variations, being limited only by the contents of the accompanying claims, which include the possible equivalents.

## Claims

1. A system for generating a list (60) of task items and/or actions to perform, comprising
(i) at least one information-carrying element (10); and
(ii) a reading device (20),
**characterized in that**
(a) the at least one information-carrying element (10) being provided with an identification means (12), and the reading device (20) being provided with a reading means (22),
(b) said identification means (12) and the reading means (22) being configured for establishing data communication (50) between said the least one information-carrying element (10) and the reading means (20), and
(c) the reading device (20) being configured for reading stored data in the at least one information-carrying element (10) through the data communication (50), the reading device (20) further being configured for processing the read data and for generating the list (60) from said data.

2. The system according to claim 1, **characterized in that** the storage means (100) is a contact surface.

3. The system according to claim 1, **characterized in that** the storage means (100) is a box.

4. The system according to claim 2, **characterized in that** the information-carrying element (10) is configured for adhering, in a magnetic way or glued in a detachable and non-destructive manner, onto the contact surface (100) of metal or the like.

5. The system according to claim 2, **characterized in that** the contact surface (100) is a refrigerator, a metallic wall panel or a metallic surface.

6. The system according to claim 1, **characterized in that** said at least one information-carrying element (10) stores different types of characteristics related to the type of product or service and characteristics variable in time such as amount, color, trademark, among others.

7. The system according to claim 6, **characterized in that** a first information-carrying element (10) stores characteristics related to the type of product or service and a second information-carrying element (10) stores characteristics variable in time such as amount, color, trademark, among others.

8. The system according to claim 1, **characterized in that** said at least one information-carrying element (10) represents task items and/or actions to perform.

9. The system according to claim 1, **characterized in that** the data communication (50) between the identification means (12) and the reading means (22) is carried out by means of Radio Frequency Identification (RFID).

10. The system according to claim 1, **characterized in that** the data communication (50) between the identification means (12) and the reading means (22) is carried out by means of a bar-code reading.

11. The system according to claim 1, **characterized in that** the data communication (50) between the identification means (12) and the reading means (22) is carried out by means of a Near Field Communication (NFC).

12. The system according to claim 1, **characterized in that** the data communication (50) between the identification means (12) and the reading means (22) is carried out by means of optical character or image recognition.

13. The system according to claim 1, **characterized in that** the reading device (20) is a portable device.

14. The system according to claim 1, **characterized in that** the list (60) is stored in the reading device (20).

15. The system according to claim 1, **characterized in that** the list (60) is transmitted to a printer for being printed.

16. The system according to claim 1, **characterized in that** the list (60) is shared with at least one access device (62), with at least one database (63), with at least one server (64) or with at least one cloud server (65) by means of a communication network (300).

17. The system according to claim 1, **characterized in that** the at least one information-carrying element (10) and the list (60) are distributed to a plurality of suppliers and/or providers of tasks and/or actions to perform (200) free of charge.

18. The system according to claim 16, **characterized in that** the communication network (300) makes available, on the website or on the application the list (60), so that the plurality of suppliers and/or providers of tasks and/or actions to perform (200) will have access to it.

19. The system according to claim 18, **characterized in that** the plurality of suppliers and/or providers of tasks and/or actions to perform (200) sends proposals for carrying out and/or supplying the tasks and/or actions of the list (60).

20. A method for generating a list (60) of task items and/or actions to perform, **characterized in that** it comprises:
(a) arranging at least one information-carrying element (10) on a storing means (100);
(b) placing one reading device (20) at the reach of said at least one information-carrying element (10);
(c) establishing a data communication (50) between said at least one information-carrying element (10) and the reading device (20);
(d) transferring the stored data in said at least one information-carrying element (10) to the reading device (20); and
(e) generating the list (60) from the read data.
